# EUROPEAN PATENT SPECIFICATION

(11) **EP 3 760 831 B1**
(45) Date of publication and mention of the grant of the patent: **23.03.2022**
(21) Application number: 19184106.3
(22) Date of filing: 03.07.2019
(51) Int. Cl.: E21B 43/08, B01D 29/46, B01D 35/02, B01D 39/20, E03B 3/18

(54) **SEPARATING DEVICE AND USE OF A SEPARATING DEVICE**
FILTERVORRICHTUNG UND VERWENDUNG EINER FILTERVORRICHTUNG
DISPOSITIF DE SÉPARATION ET UTILISATION D'UN DISPOSITIF DE SÉPARATION

(43) Date of publication of application: 06.01.2021
(73) Proprietor: 3M Innovative Properties Company, Saint Paul, MN 55133-3427 (US)
(72) Inventor: Meschke, Frank, 87474 Buchenberg (DE); Victor, Georg, 87487 Wiggensbach (DE); Joly, Samuel, 87437 Kempten (DE); Rauch, Wolfgang, 88260 Argenbühl (DE); Uibel, Krishna, 87448 Waltenhofen (DE); Barth, Peter, 87439 Kempten (DE); Lange, Dietrich, 87480 Weitnau (DE)
(74) Representative: Mössner, Brigitte

(56) References cited:
- WO-A1-2016/018821
- WO-A1-2019/082131
- FR-A1- 2 738 753
- NO-L- 20 076 149
- US-A- 5 901 789
- US-A1- 2016 024 895
- US-A1- 2017 362 921
- US-B2- 8 662 167
- US-B2- 8 833 447
- US-B2- 8 893 781

## Description

### Technical Field

The present disclosure relates to a separating device for the removal of solid particles from a fluid.

### Background

Such separating devices are required in many oil and gas extraction wells. Mineral oil and natural gas are stored in naturally occurring underground reservoirs, the oil or gas being distributed in more or less porous and permeable mineral layers. The aim of every oil or gas drill hole is to reach the reservoir and exploit it in such a way that, as far as possible, only saleable products such as oil and gas are extracted, while undesired by-products are minimized or even avoided completely. The undesired by-products in oil and gas extraction include solid particles such as sands and other mineral particles that are entrained from the reservoir up to the borehole by the liquid or gas flow.

Since the mineral sands are often abrasive, the influx of such solids into the production tubing and pump cause considerable undesired abrasive and erosive wear on all of the technical internals of the borehole. It is therefore endeavoured to free the production flow of undesired sands directly after it leaves the reservoir, that is to say while it is still in the borehole, by filter systems.

Problems of abrasion and erosion in the removal of solid particles from liquid and gas flows are not confined to the oil and gas industry, but may also occur in the extraction of water. Water may be extracted for the purpose of obtaining drinking water or else for the obtainment of geothermal energy. The porous, often loosely layered reservoirs of water have the tendency to introduce a considerable amount of abrasive particles into the material that is extracted. In these applications too, there is the need for abrasion- and erosion-resistant filters. Also in the extraction of ore and many other minerals, there are problems of abrasion and erosion in the removal of solid particles from liquid and gas flows.

In oil and gas extraction, the separation of undesired particles is usually achieved today by using filters that are produced by spirally winding and welding steel forming wires onto a perforated basepipe. Such filters are referred to as "wire wrap filters". Another commonly used type of construction for filters in oil and gas extraction is that of wrapping a perforated basepipe with metal screening meshes. These filters are referred to as "metal mesh screens". Both methods provide filters with effective screen apertures of 75 µm to 350 µm. Depending on the type of construction and the planned intended use of both these types of filter, the filtering elements are additionally protected from mechanical damage during transport and introduction into the borehole by an externally fitted, coarse-mesh cage. The disadvantage of these types of filter is that, under the effect of the abrasive particles flowing at high speed, metal structures are subject to rapid abrasive wear, which quickly leads to destruction of the filigree screen structures. Such high-speed abrasive flows often occur in oil and/or gas extraction wells, which leads to considerable technical and financial maintenance expenditure involved in changing the filters. There are even extraction wells which, for reasons of these flows, cannot be controlled by the conventional filtering technique, and therefore cannot be commercially exploited. Conventional metallic filters are subject to abrasive and erosive wear, since steels, even if they are hardened, are softer than the particles in the extraction wells, which sometimes contain quartz.

In order to counter the abrasive flows of sand with abrasion-resistant screen structures, US 8,893,781 B2, US 8,833,447 B2, US 8,662,167 B2 and WO 2016/018821 A1 propose filter structures in which the filter gaps, that is to say the functional openings of the filter, are created by stacking specially formed densely sintered annular discs of a brittle-hard material, preferably of a ceramic material. In this case, spacers are arranged on the upper side of annular discs, distributed over the circumference of the discs.

In the separating device of WO 2016/018821 A1, a perforated pipe is located inside the stack of annular discs, onto which pipe the brittle-hard annular discs are stacked. At least three bands, preferably made from a metallic material, are provided axially parallel and uniformly spaced apart on the lateral surface of the perforated pipe. The annular discs are pushed on the at least three bands. The bands may be provided with a curvature, the convex side of the curved band being oriented inwards. During operation of the separating device, the fluid flow of unfiltered material has a tendency to be collected and moving upstream in the bands, whereby a large quantity of the fluid flow will enter the stack of annular discs at the upper side of the separating device. This reduces the maximum flow of fluid which can be filtered by the separating device.

Furthermore, due to the at least three bands provided axially parallel on the lateral surface of the perforated pipe, the perforations need to be placed in positions between the bands. As a consequence, multiple perforations are provided in the same horizontal plane of the perforated pipe which reduces the tensional strength of the perforated pipe.

Therefore, there is still a need to provide an improved separating device for the removal of solid particles from fluids, in particular from oil, gas and water. Particularly, there is a need to provide a separating device having an improved flow dynamics and an improved tensional strength.

As used herein, "a", "an", "the", "at least one" and "one or more" are used interchangeably. The term "comprise" shall include also the terms "consist essentially of" and "consists of".

### Summary

In a first aspect, the present disclosure relates to a separating device for removing solid particles from fluids, comprising
- a stack of at least three annular discs defining a central annular region along a central axis, each annular disc having an upper side and an underside, wherein the upper side of each annular disc each has two or more spacers, and wherein the upper side of each annular disc contacts the underside of the adjacent annular disc defining a separating gap,
- a perforated pipe, which is located inside the concentric stack of at least three annular discs,
- an end cap at the upper end of the central annular region and an end cap at the lower end of the central annular region, and
- a band which is provided helically in axial direction on the outer surface of the perforated pipe and around which the annular discs are placed, whereby the annular discs are centered on the perforated pipe.

In another aspect, the present disclosure also relates to a separating device for removing solid particles from fluids, comprising
- a stack of at least three annular discs defining a central annular region along a central axis, each annular disc having an upper side and an underside, wherein the upper side and the underside of every second annular disc in the stack each has two or more spacers, and wherein the upper side and the underside of the respectively adjacent annular discs do not comprise any spacers, and wherein the upper side of each annular disc contacts the underside of the adjacent annular disc defining a separating gap,
- a perforated pipe, which is located inside the concentric stack of at least three annular discs,
- an end cap at the upper end of the central annular region and an end cap at the lower end of the central annular region, and
- a band which is provided helically in axial direction on the outer surface of the perforated pipe and around which the annular discs are placed, whereby the annular discs are centered on the perforated pipe.

In yet a further aspect, the present disclosure relates to the use of a separating device as disclosed herein for removing solid particles from fluids
in a process for extracting fluids from extraction wells, or
in water or in storage installations for fluids, or
in a process for extracting ores and minerals.

The separating device as disclosed herein has an improved flow dynamics. The inflow of fluid is more homogeneous over the complete axial length of the separating device compared to the separating device of WO 2016/018821 A1, and therefore the maximum flow of fluid which can be filtered by the separating device is increased.

In some embodiments, the perforated pipe of the separating device as disclosed herein has an improved tensional strength. An improved tensional strength is important for screen deployment procedures.

### Brief description of the drawings

The present disclosure is explained in more detail on the basis of the drawings, in which
Figure 1 schematically shows the overall view of a separating device as disclosed herein;
Figure 2 shows a cross-sectional view of a separating device as disclosed herein;
Figures 3A - 3L show various details of the stack of annular discs of a separating device as disclosed herein;
Figures 4A - 4L show various details of the stack of annular discs of a separating device as disclosed herein;
Figures 5A - 5B show different views of a perforated pipe and a band which is provided helically in axial direction on the outer surface of the perforated pipe of a separating device as disclosed herein; and
Figures 6A - 6B show different views of a perforated pipe and a band which is provided helically in axial direction on the outer surface of the perforated pipe of a separating device as disclosed herein.

### Detailed Description

Preferred embodiments and details of the separating device of the present disclosure are explained in more detail below with reference to the drawings.

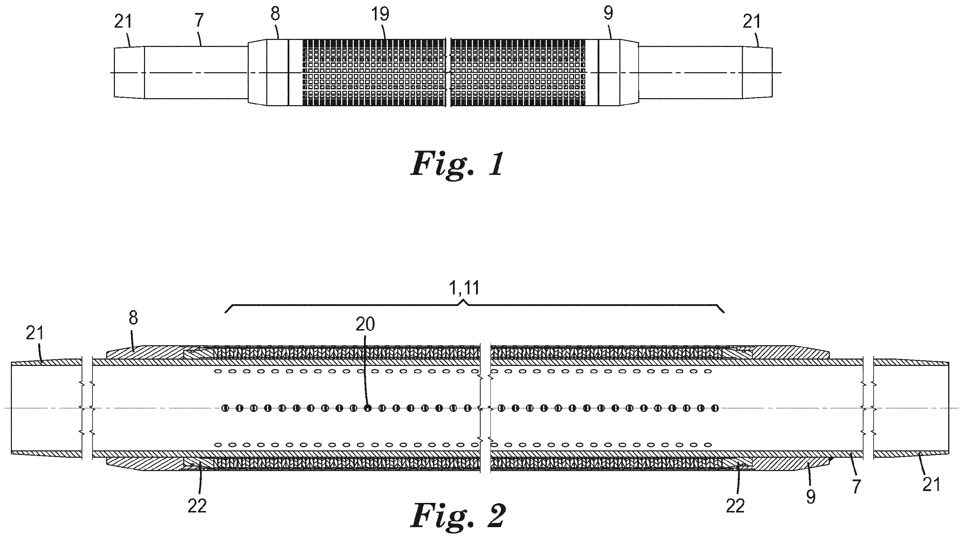

Figure 1 shows the overall view of a separating device according to the present disclosure. Figure 2 shows a cross-sectional view of a separating device according to the present disclosure. The separating device according to the present disclosure comprises a stack of at least three annular discs defining a central annular region 1, 11 along a central axis. The separating device comprises a perforated pipe 7, on which the annular discs are stacked. The perforated pipe 7 with perforations 20 is located inside the stack 1, 11 of annular discs and is also referred to hereinafter as the base pipe. Usually provided at both ends of the perforated pipe 7 are threads 21, by way of which the separating device can be connected to further components, either to further separating devices or to further components of the extraction equipment. The separating device comprises an end cap 8 at the upper end of the central annular region and an end cap 9 at the lower end of the central annular region 1, 11, the end caps being firmly connected to the base pipe 7. The separating device may further comprise a tubular shroud 19 (see Figure 1) that can be freely passed through by a flow. The shroud 19 protects the central annular region from mechanical damage during handling and fitting into the borehole.

For better understanding, and since the separating device according to the present disclosure is generally introduced into an extraction borehole in vertical alignment, the terms "upper" and "lower" are used here, but the separating device may also be positioned in horizontal orientation in the extraction borehole (in which case, upper typically would refer to the most upstream portion and lower would refer to the most downstream portion of the separating device, when in service).

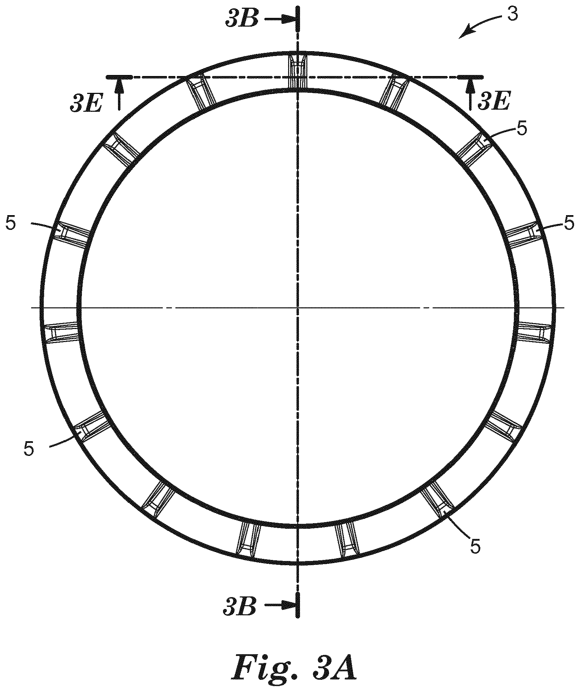

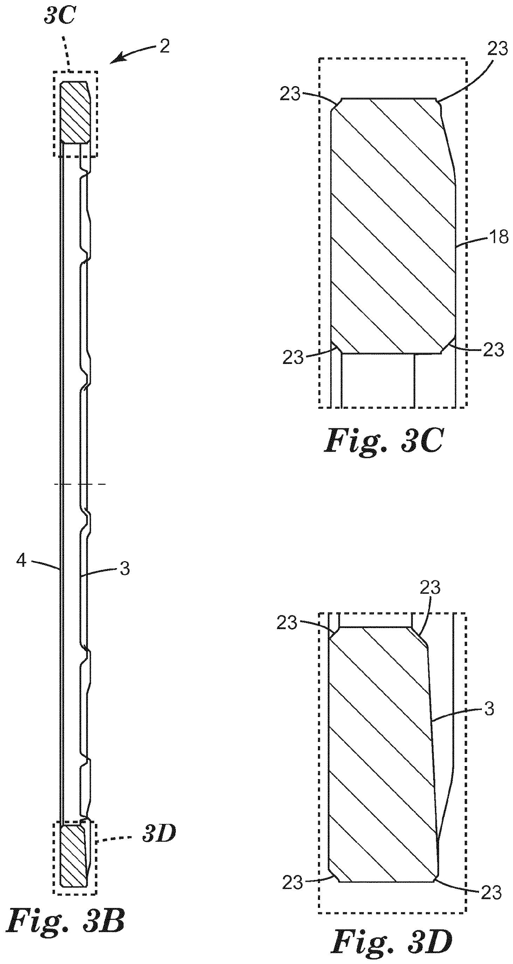

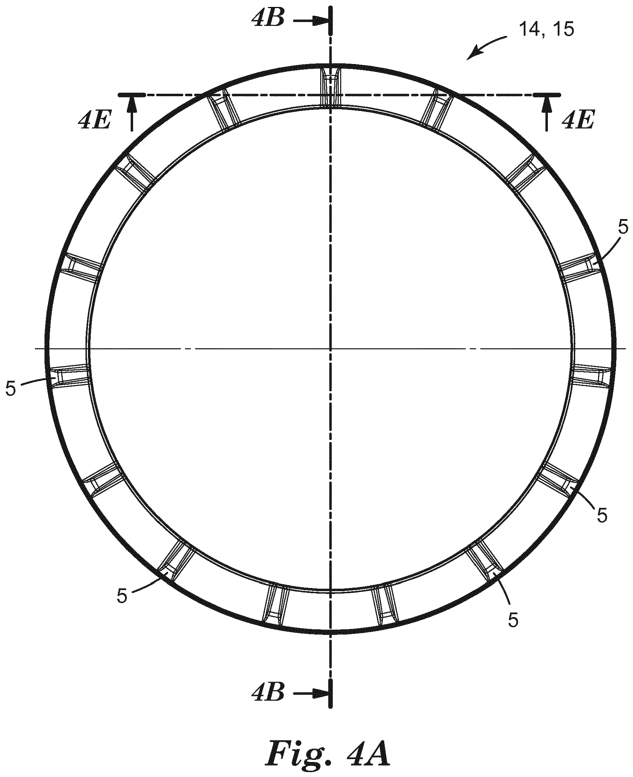

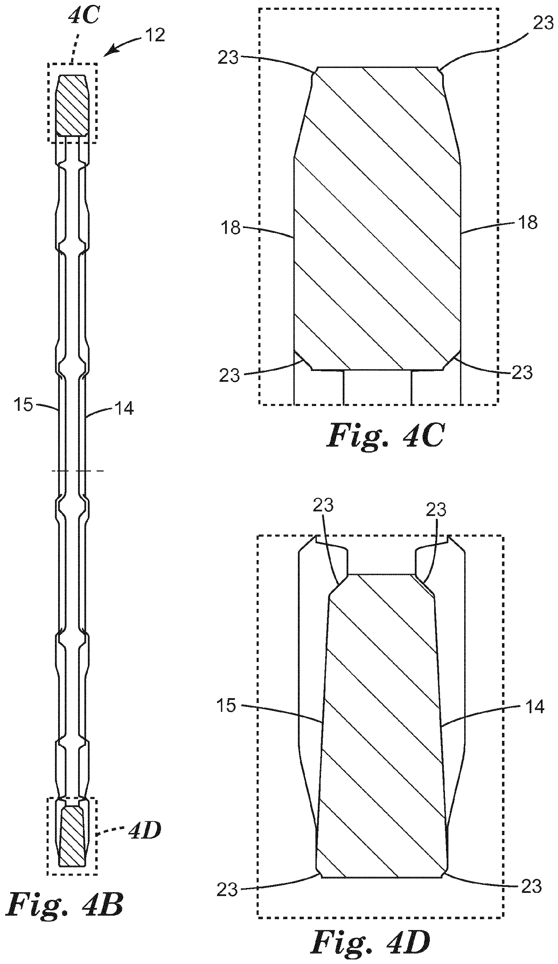

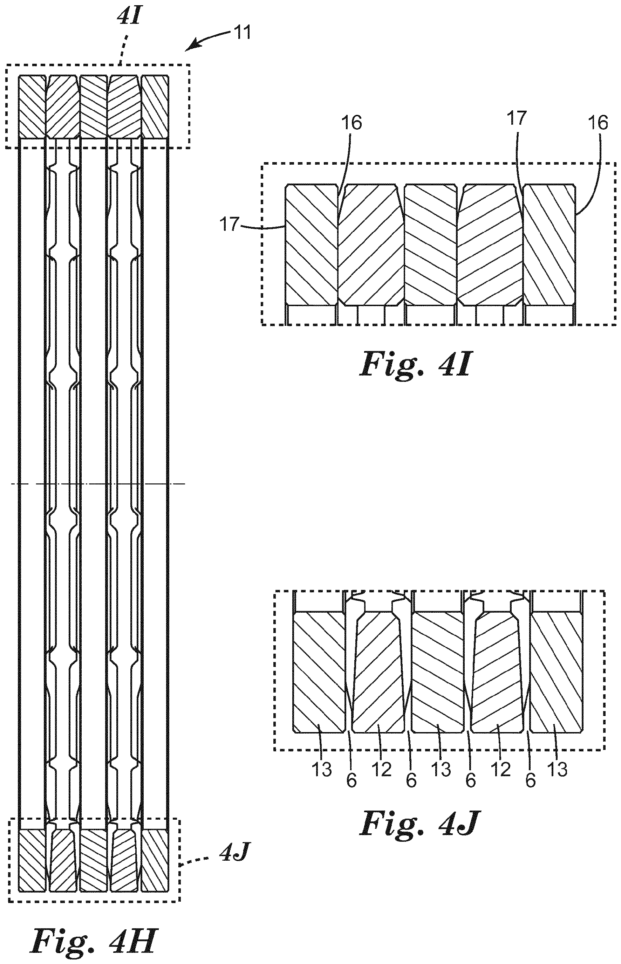

The separating device according to the present disclosure comprises a stack of at least three annular discs defining a central annular region 1, 11 (see Figures 2, 3H, 4H) along a central axis. The annular discs 2, 12, 13 (see Figures 3A - 3F and 4A - 4J) have an upper side 3, 14, 16 and an underside 4, 15, 17 (see Figures 3B, 4B, 4I-4J).

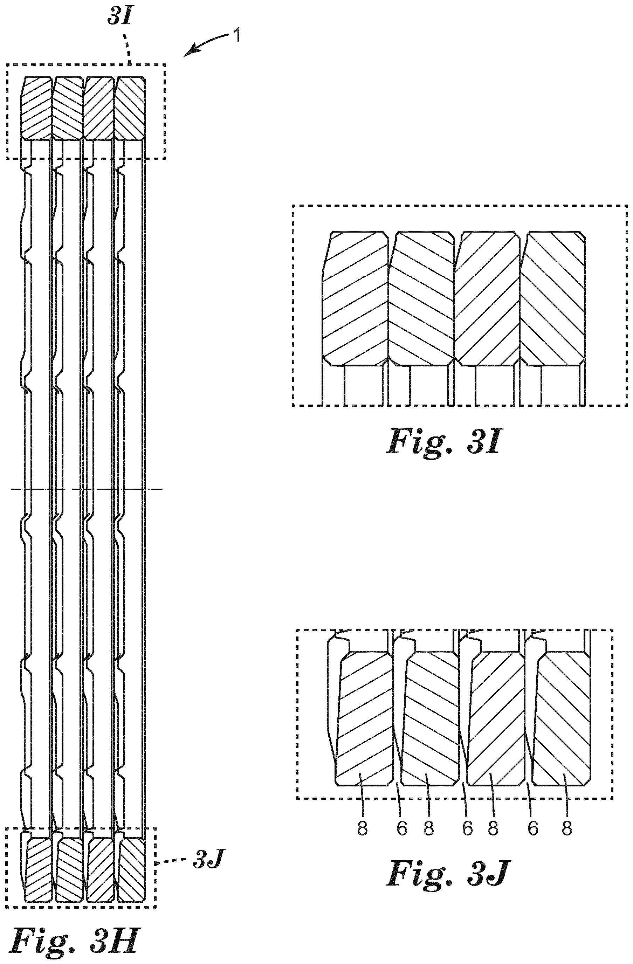

In some embodiments, the upper side 3 of each annular disc 2 each has one or more spacers 5 (see Figure 3A), and the underside 4 of each annular disc does not comprise any spacers (see Figure 3B). The upper side 3 of each annular disc 2 contacts the underside 4 of the adjacent annular disc, defining a separating gap 6 (see Figures 3H-3J).

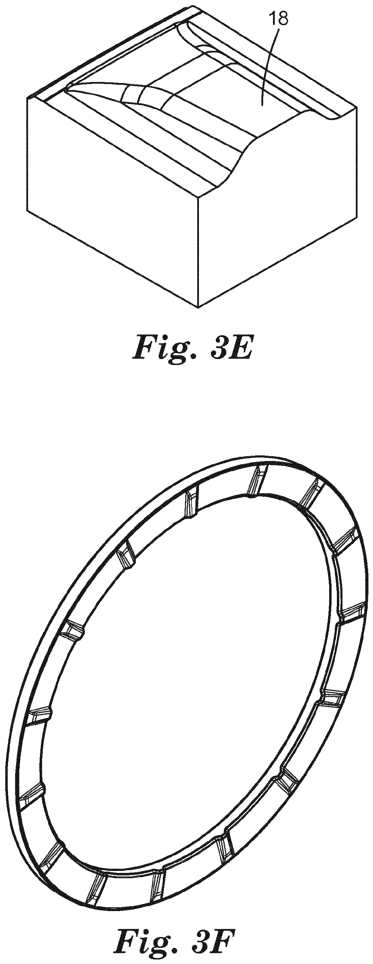

The contact area 18 of the spacers 5 may be planar, so that the spacers 5 have a planar contact area with the adjacent annular disc (see Figures 3C and 3E). The planar contact area 18 is in contact with the adjacent underside 4 of the adjacent annular disc. The annular discs are stacked in such a way that between the individual discs there is in each case a separating gap 6 for the removal of solid particles.

The upper side 3 of each annular disc 2 may have only two spacers 5. Typically, the upper side 3 of each annular disc 2 has three or more spacers 5 which are distributed over the circumference of the upper side 3 of the annular discs 2.

The underside 4 of each annular disc 2 may be formed at right angles to the central axis.

In some further embodiments, the upper side 14 and the underside 15 of every second annular disc 12 in the stack each has one or more spacers 5 (see Figures 4A - 4F). The upper side 16 and the underside 17 of the respectively adjacent annular discs 13 do not comprise any spacers (see Figures 4H - 4J). The upper side 14, 16 of each annular disc 12, 13 contacts the underside 15, 17 of the adjacent annular disc, defining a separating gap 6 (see Figures 4H - 4J).

The upper side 14 and the underside 15 of each annular disc 12 each may have only two spacers 5. Typically, the upper side 14 and the underside 15 of each annular disc 12 each has three or more spacers 5 which are distributed over the circumference of the upper side 14 and the underside 15 of the annular discs 12.

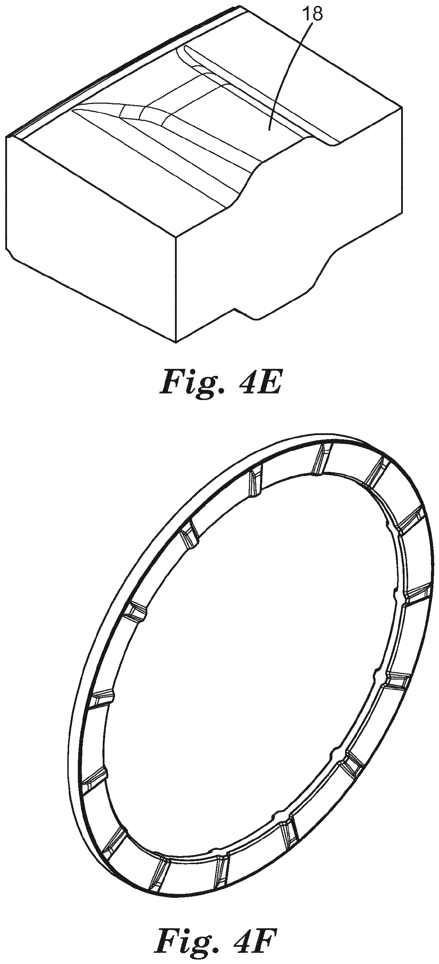

The contact area 18 of the spacers 5 may be planar, so that the spacers 5 have a planar contact area with the adjacent annular disc (see Figures 4C, 4E). The planar contact area 18 of the spacers 5 of the upper side 14 of an annular disc 12 is in contact with the underside 17 of the adjacent annular disc 13, and the planar contact area 18 of the spacers 5 of the underside 15 of an annular disc 12 is in contact with the upper side 16 of the adjacent annular disc 13. The annular discs are stacked in such a way that between the individual discs there is in each case a separating gap 6 for the removal of solid particles.

Every upper side 16 of an annular disc 13 which does not comprise any spacers may be formed at right angles to the central axis, and every underside 17 of an annular disc 13 which does not comprise any spacers may be formed at right angles to the central axis.

The separating device further comprises a perforated pipe 7 located in the central annular region 1, 11 (see Figures 1 and 2). The perforated pipe or base pipe is co-centric with the central annular region.

The base pipe is perforated, i.e. provided with holes, in the region of the central annular region; it is not perforated outside the region of the central annular region. The perforation 20 serves the purpose of directing the filtered fluid, i.e. the fluid flow freed of the solid particles, such as for example gas, oil or mixtures thereof, into the interior of the base pipe, from where it can be transported or pumped away.

Threads 21 are usually cut at both ends of the base pipe 7 and can be used for screwing the base pipes together into long strings.

The base pipe can consist of a metallic material, a polymer or ceramic material. The base pipe may consist of a metallic material such as steel, for example steel L80. Steel L80 refers to steel that has a yield strength of 80 000 psi (corresponding to about 550 MPa). As an alternative to steel L80, steels that are referred to in the oil and gas industry as J55, N80, C90, T95, P110 and L80Cr13 (see Drilling Data Handbook, 8th Edition, IFP Publications, Editions Technip, Paris, France) may also be used. Other steels, in particular corrosion-resistant alloy and high-alloy steels, may also be used as the material for the base pipe. For special applications in corrosive conditions, base pipes of nickelbased alloys or Duplex stainless steels may also be used. It is also possible to use aluminum materials as the material for the base pipe, in order to save weight. Furthermore, base pipes of titanium or titanium alloys may also be used.

The inside diameter of the annular discs must be greater than the outside diameter of the base pipe. This is necessary on account of the differences with regard to the thermal expansion between the metallic base pipe and the material from which the annular discs are made and also for technical reasons relating to flow. It has been found to be favorable in this respect that the inside diameter of the annular discs is at least 0.5 mm and at most 10 mm greater than the outside diameter of the base pipe. In particular embodiments, the inside diameter of the annular discs is at least 1.5 mm and at most 5 mm greater than the outside diameter of the base pipe.

The outside diameter of the base pipe is typically from 1 inch to 10 inches.

The separating device further comprises two end caps 8, 9 (see Figures 1 and 2) at the upper and lower ends of the central annular region 1, 11. The end caps are produced from metal, usually steel and typically from the same material as the base pipe.

The end caps 8, 9 may be firmly connected to the base pipe 7. The end caps may be fastened to the base pipe by means of welding, clamping, riveting or screwing. During assembly, the end caps are pushed onto the base pipe after the central annular region and are subsequently fastened on the base pipe. In the embodiments of the separating device as disclosed herein that is shown in Figures 1 and 2, the end caps are fastened by means of welding.

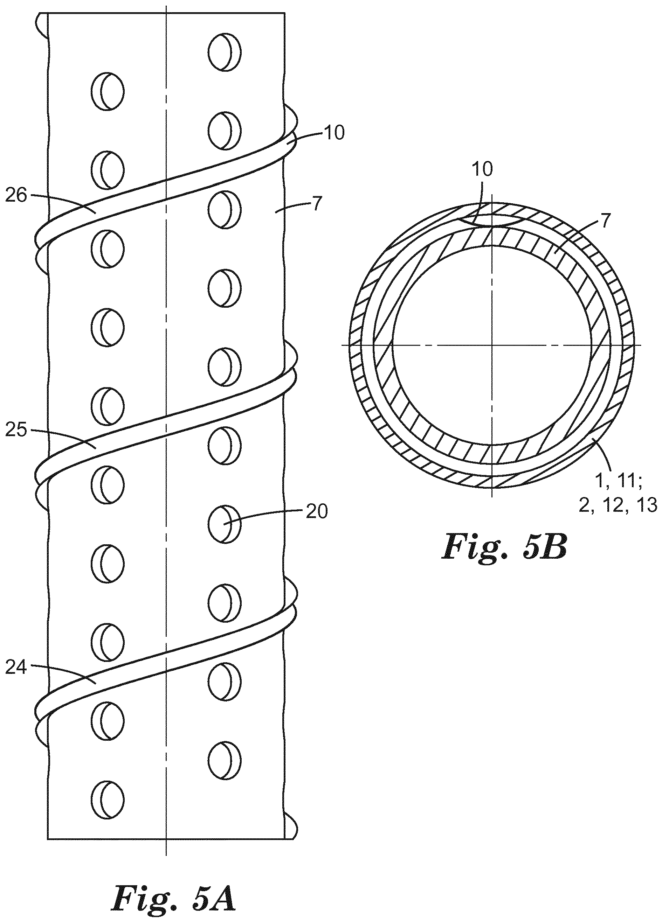

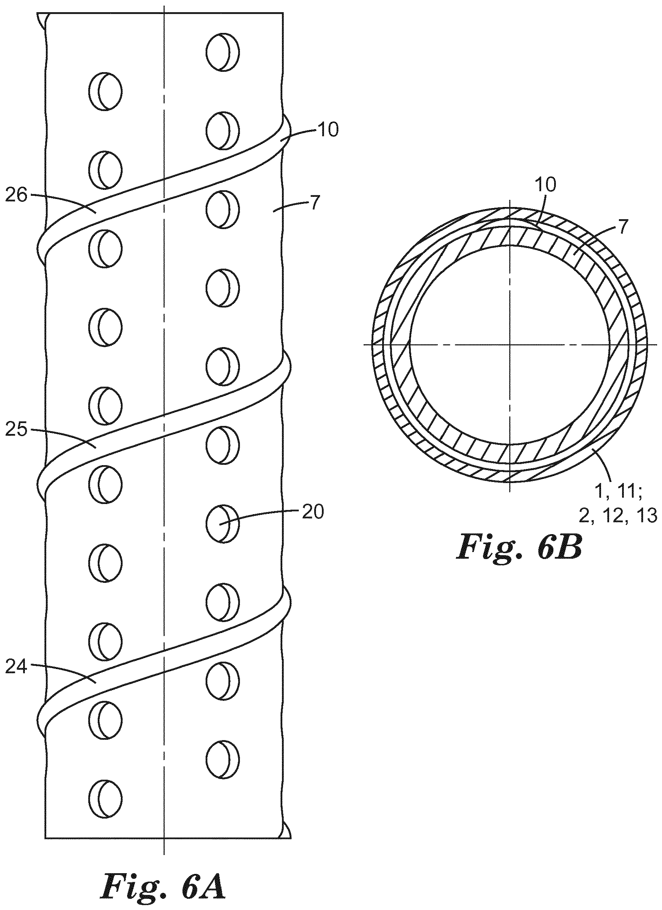

The separating device of the present disclosure further comprises a band (10) which is provided helically in axial direction on the outer surface of the perforated pipe (see Figures 5a, 6A). The band which is provided in axial direction on the outer surface of the perforated pipe may also be referred to as the helical band. The annular discs are placed around the helical band, whereby the annular discs are centered on the perforated pipe.

The helical band also allows the differences in thermal expansion between the base pipe and the annular stack in the radial direction to be compensated. Moreover, production-related diameter tolerances of the base pipe and the annular discs can also be compensated by the helical band. The centring of the annular stack on the base pipe also serves the purpose of setting a uniformly wide annular gap between the base pipe and the annular stack. This ensures that the filtrate can flow uniformly through a number of perforation bores into the base pipe.

The length of the helical band corresponds at least to the length of the annular stack, which ensures that all of the annular discs of the annular stack including the first and last annular disc are centered.

The helical band may have elastic properties in a direction perpendicular to the central axis of the central annular region. Due to the elastic properties, the helical band is elastically deformable in radial direction. In some embodiments, the helical band may have a hollow compressible structure. In some embodiments, the helical band may have a fibrous compressible structure. In some embodiments, the helical band may have a compact compressible structure. In some embodiments, the helical band may have a compressible profiled structure.

The helical band may have a planar configuration. The helical band may also have a profiled configuration in axial direction of the band.

If the helical band has a profiled configuration, the profiled configuration may be a curvature having an outwardly curved side. The outwardly curved side of the curvature may be oriented towards the perforated pipe, i.e. inwards, or towards the central annular region, i.e. outwards. Preferably, the outwardly curved side of the curvature is oriented towards the central annular region, i.e. inwards.

The helical band may have only one winding around the outer surface of the perforated pipe. The helical band may also have a plurality of windings around the outer surface of the perforated pipe.

If the helical band has a plurality of windings around the outer surface of the perforated pipe, the distance between adjacent windings may be constant, which means that there is a constant slope of the windings of the helical band, and also the winding length is constant.

The distance between adjacent windings of the helical band may also be variable in axial direction. If the distance between adjacent windings is variable in axial direction, the distance between adjacent windings preferably is decreasing in axial direction towards the upper end of the separating device, which means that the slope of the windings is decreasing in axial direction towards the upper end of the separating device, and also the winding length is decreasing.

In some embodiments, the helical band consists of one single continuous helical band extending from the lower end to the upper end of the perforated pipe. In some other embodiments, the helical band is composed of two or more parts which together form a discontinuous helical band extending from the lower end to the upper end of the perforated pipe. In some embodiments, two or more helical bands may extend from the lower end to the upper end of the perforated pipe.

The material of the helical band should preferably be chosen such that it does not corrode under operating conditions and it must be oil- water- and temperature-resistant. Metal or plastic is suitable as the material for the helical band, preferably metal alloys on the basis of iron, nickel and cobalt, more preferably steel, more preferably spring strip steel. For example, spring strip steel with the material number 1.4310, of a spring-hard configuration, may be used as the material for the helical band. The width of the helical band may be for example 2 to 30 mm and the thickness may be for example 0.1 to 0.5 mm.

If steel is used as the material for the helical band, it must be ensured when selecting the material that undesired electrochemical reactions do not occurr on contact with other metallic structural elements of the separating device.

In some embodiments, the helical band is fixed on the outer surface of the perforated pipe. The helical band may be fixed onto the outer surface of the perforated pipe by welding, brazing or gluing.

In some embodiments, the helical band is not permanently fixed on the outer surface of the perforated pipe.

The thickness and width of the centring bands should be chosen such that the annular discs can be axially displaced on the base pipe with a "sliding fit". This means that, in the vertical position, the annular discs are not axially displaced under their own weight. This is generally the case if the force for displacing the annular discs on the basepipe in the horizontal direction, that is to say without the influence of gravitational force, lies between 0.1 N and 10 N, preferably between 0.5 N and 5 N.

In some embodiments of the separating device of the present disclosure, pipes such as those that are used in the oil and gas industry for metallic filters (wire wrap filter, metal mesh screen) may be used as the base pipe. The perforation may be provided in accordance with patterns customary in the industry, for example 30 holes with a diameter of 9.52 mm may be introduced over a base pipe length of 0.3048 m (corresponding to 1 foot).

In some embodiments of the separating device of the present disclosure, the perforated pipe has perforations being arranged helically in axial direction of the perforated pipe. By this arrangement of the perforations, there is preferably only one perforation on a circumferential line at the outer surface of the perforated pipe. The helical band is arranged in parallel to the helical arrangement of the perforations, so that the helical band does not cover the perforations.

The separating device as disclosed herein may further comprise a thermal compensator (22) at the upper end or at the lower end or at both ends of the central annular region. The thermal compensator serves to compensate for the different thermal expansions of the base pipe and the central annular region, from ambient temperature to operation temperature. The thermal compensator may for example comprise one or more springs, or a compensating bush consisting of a material on the basis of polytetrafluoroethylene (PTFE), or a tubular double-walled liquid-filled container, the outer walls of which are corrugated in the axial direction.

The central annular region of the separating device disclosed herein can, and typically does, comprise more than 3 annular discs. The number of annular discs in the central annular region can be from 3 to 500, but also larger numbers of annular discs are possible. For example, the central annular region can comprise 50, 100, 250 or 500 annular discs.

The annular discs 2 and the annular discs 12, 13, respectively, of the central annular region 1, 11 are stacked on top of each other, resulting in a stack of annular discs. The annular discs 2 and the annular discs 12, 13, respectively, are stacked and fixed in such a way that between the individual discs there is in each case a separating gap 6 for the removal of solid particles.

Every upper side 3, 14 of an annular disc 2, 12 which has one or more spacers may be inwardly or outwardly sloping, preferably inwardly sloping, in the regions between the spacers (see Figures 3D, 4D), and every underside 15 of an annular disc 12 which has one or more spacers may be inwardly or outwardly sloping, preferably inwardly sloping, in the regions between the spacers (see Figure 4D).

If the upper side, or the upper side and underside, respectively, of the annular discs which have one or more spacers, is inwardly or outwardly sloping in the regions between the spacers, in the simplest case, the sectional line on the upper side of the ring cross-section of the annular discs is straight and the ring cross-section of the annular discs in the portions between the spacers is trapezoidal (see Figures 3D, 4D), the thicker side of the ring cross-section having to lie on the respective inlet side of the flow to be filtered. If the flow to be filtered comes from the direction of the outer circumferential surface of the central annular region, the thickest point of the trapezoidal cross-section must lie on the outside and the upper side of the annular discs is inwardly sloping. If the flow to be filtered comes from the direction of the inner circumferential surface of the annular disc, the thickest point of the trapezoidal cross-section must lie on the inside and the upper side of the annular discs is outwardly sloping. The forming of the ring cross-section in a trapezoidal shape, and consequently the forming of a separating gap that diverges in the direction of flow, has the advantage that, after passing the narrowest point of the filter gap, irregularly shaped particles, i.e. non-spherical particles, tend much less to get stuck in the filter gap, for example due to rotation of the particles as a result of the flow in the gap. Consequently, a separating device with a divergent filter gap formed in such a way is less likely to become plugged and clogged than a separating device in which the separating gaps have a filter opening that is constant over the ring cross-section.

The height of the separating gap, i.e. the filter width, may be from 50 to 1000 µm. The height of the separating gap is measured at the position of the smallest distance between two adjacent annular discs.

The annular discs 2, 12, 13 may have a height of 1 to 12 mm. More specifically, the height of the annular discs may be from 2 to 7 mm. The height of the annular discs is the thickness of the annular discs in axial direction.

In some embodiments, the annular discs 12 having one or more spacers on the upper side 14 and the underside 15 have a height of 1 to 12 mm, and the annular discs 13 which do not comprise any spacers may have the same height as the annular discs 12 with spacers, or may be thinner than the annular discs 12 with spacers. The annular discs 13 may have a height of 2 to 7 mm, for example. With the reduced height of the annular discs 13 which do not comprise any spacers, the open flow area can be increased.

The base thickness of the annular discs is measured in the region between the spacers and, in the case of a trapezoidal cross-section, on the thicker side in the region between the spacers. The axial thickness or height of the annular discs in the region of the spacers corresponds to the sum of the base thickness and the filter width.

The height of the spacers determines the filter width of the separating device, that is to say the height of the separating gap between the individual annular discs. The filter width additionally determines which particle sizes of the solid particles to be removed, such as for example sand and rock particles, are allowed to pass through by the separating device and which particle sizes are not allowed to pass through. The height of the spacers is specifically set in the production of the annular discs.

For any particular separating device, the annular discs may have uniform base thickness and filter width, or the base thickness and/or filter width may vary along the length of the separating device (e.g., to account for varying pressures, temperatures, geometries, particle sizes, materials, and the like).

The outer contours of the annular discs may be configured with a bevel 24, as illustrated in Figures 3C - 3D and 4C - 4D. It is also possible to configure the annular discs with rounded edges. This may, for some applications, represent even better protection of the edges (versus straight edged) from the edge loading that is critical for the materials from which the annular discs are produced.

The circumferential surfaces (lateral surfaces) of the annular discs may be cylindrical. However, it is also possible to form the circumferential surfaces as outwardly convex, in order to achieve a better incident flow.

In practice, it is expected that the annular discs are produced with an outer diameter that is adapted to the borehole of the extraction well provided in the application concerned, so that the separating device according to the present disclosure can be introduced into the borehole with little play, in order to make best possible use of the cross-section of the extraction well for achieving a high delivery output. The outer diameter of the annular discs may be 20 - 250 mm, but outer diameters greater than 250 mm are also possible, as the application demands.

The radial ring width of the annular discs may lie in the range of 8 - 20 mm. These ring widths are suitable for separating devices with basepipe diameters in the range of 2⅜ to 5½ inches.

As already stated, the spacers arranged on the upper side, or on the upper side and the underside, respectively, of the annular discs have planiform contact with the adjacent annular disc. The spacers make a radial throughflow possible and therefore may be arranged radially aligned on the first major surface of the annular discs. The spacers may, however, also be aligned at an angle to the radial direction.

The transitions between the surface of the annular discs, i.e. the upper side, or the upper side and the underside of the annular discs, and the spacers are typically not formed in a step-shaped or sharp-edged manner. Rather, the transitions between the surface of the annular discs and the spacers are typically configured appropriately for the material from which the annular discs are made, i.e. the transitions are made with radii that are gently rounded. This is illustrated in Figures 3E and 4E.

The contact area of the spacers, that is to say the planar area with which the spacers are in contact with the adjacent annular disc are not particularly limited, and may be, for instance, rectangular, round, rhomboidal, elliptical, trapezoidal or else triangular, while the shaping of the corners and edges should always be appropriate for the material from which the annular discs are made, e.g. rounded.

Depending on the size of the annular discs, the contact area 18 of the individual spacers is typically between 4 and 100 mm².

The spacers 5 may be distributed over the circumference of the annular discs (see Figures 3A and 4A). The spacers 5 may be distributed homogeneously or non-homogeneously over the circumference of the annular discs. The number of spacers may be even or odd.

In some embodiments of the separating device, the annular discs are stacked in such a way that the spacers lie on top of each other, i.e. the spacers are arranged in alignment one above another. In other embodiments of the separating device, the annular discs are stacked in such a way that the spacers do not lie on top of each other. If only one spacer is provided on the upper side 3 of the annular discs 2, or on the upper side 14 and underside 15 of the annular discs 12, the annular discs are stacked in such a way that the spacers lie on top of each other.

Each annular disc comprises a material independently selected from the group consisting of (i) ceramic materials; (ii) mixed materials having fractions of ceramic or metallic hard materials and a metallic binding phase; and (iii) powder metallurgical materials with hard material phases formed in-situ.

In some embodiments, the annular discs are produced from a material which is independently selected from the group consisting of (i) ceramic materials; (ii) mixed materials having fractions of ceramic or metallic hard materials and a metallic binding phase; and (iii) powder metallurgical materials with hard material phases formed in-situ. These materials are typically chosen based upon their relative abrasion- and erosion-resistance to solid particles such as sands and other mineral particles and also corrosion-resistance to the extraction media and the media used for maintenance, such as for example acids.

The material which the annular discs comprise can be independently selected from this group of materials, which means that each annular disc could be made from a different material. But for simplicity of design and manufacturing, of course, all annular discs of the separating device could be made from the same material.

The ceramic materials which the annular discs can comprise or from which the annular discs are made can be selected from the group consisting of (i) oxidic ceramic materials; (ii) non-oxidic ceramic materials; (iii) mixed ceramics of oxidic and non-oxidic ceramic materials; (iv) ceramic materials having a secondary phase; and (v) long- and/or short fiber-reinforced ceramic materials.

Examples of oxidic ceramic materials are materials chosen from Al₂O₃, ZrO₂, mullite, spinel and mixed oxides. Examples of non-oxidic ceramic materials are SiC, B₄C, TiB₂ and Si₃N₄. Ceramic hard materials are, for example, carbides and borides. Examples of mixed materials with a metallic binding phase are WC-Co, TiC-Fe and TiB2-FeNiCr. Examples of hard material phases formed in situ are chromium carbides. An example of fiber-reinforced ceramic materials is C/SiC. The material group of fiber-reinforced ceramic materials has the advantage that it leads to still greater internal and external pressure resistance of the separating devices on account of its greater strength in comparison with monolithic ceramic.

The aforementioned materials are distinguished by being harder than the typically occurring hard particles, such as for example sand and rock particles, that is to say the HV (Vickers) or HRC (Rockwell method C) hardness values of these materials lie above the corresponding values of the surrounding rock. Materials suitable for the annular discs of the separating device according to the present disclosure have HV hardness values greater than 11 GPa, or even greater than 20 GPa.

All these materials are at the same time distinguished by having greater brittleness than typical unhardened steel alloys. In this sense, these materials are referred to herein as "brittle-hard".

Materials suitable for the annular discs of the separating device according to the present disclosure have moduli of elasticity greater than 200 GPa, or even greater than 350 GPa.

Materials with a density of at least 90%, more specifically at least 95%, of the theoretical density may be used, in order to achieve the highest possible hardness values and high abrasion and erosion resistances. Sintered silicon carbide (SSiC) or boron carbide may be used as the material for the annular discs. These materials are not only abrasion-resistant but also corrosion-resistant to the treatment fluids usually used for flushing out the separating device and stimulating the borehole, such as acids, for example HCI, bases, for example NaOH, or else steam.

Particularly suitable are, for example, SSiC materials with a fine-grained microstructure (mean grain size ≤ 5 µm), such as those sold for example under the names 3M^{™} silicon carbide type F and 3M^{™} silicon carbide type F plus from 3M Technical Ceramics, Kempten, Germany. Furthermore, however, coarse-grained SSiC materials may also be used, for example with a bimodal microstructure. In one embodiment, 50 to 90% by volume of the grain size distribution consisting of prismatic, platelet-shaped SiC crystallites of a length of from 100 to 1500 µm and 10 to 50% by volume consisting of prismatic, platelet-shaped SiC crystallites of a length of from 5 to less than 100 µm (3M^{™} silicon carbide type C from 3M Technical Ceramics, Kempten, Germany).

Apart from these single-phase sintered SSiC materials, liquid-phase-sintered silicon carbide (LPS-SiC) can also be used as the material for the annular discs. An example of such a material is 3M^{™} silicon carbide type T from 3M Technical Ceramics, Kempten, Germany. In the case of LPS-SiC, a mixture of silicon carbide and metal oxides is used as the starting material. LPS-SiC has a higher bending resistance and greater toughness, measured as a Klc value, than single-phase sintered silicon carbide (SSiC).

The annular discs of the separating device disclosed herein may be prepared by the methods that are customary in technical ceramics or powder metallurgy, that is to say by die pressing of pressable starting powders and subsequent sintering. The annular discs may be formed on mechanical or hydraulic presses in accordance with the principles of "near-net shaping", debindered and subsequently sintered to densities > 90% of the theoretical density. The annular discs may be subjected to 2-sided facing on their upper side and underside.

To protect the brittle-hard annular discs from mechanical damage during handling and fitting into the borehole, the separating device may be surrounded by a tubular shroud 19 (see Figure 1) that can be freely passed through by a flow. This shroud may be configured for example as a coarse-mesh screen and preferably as a perforated plate. The shroud may be produced from a metallic material, such as from steel, particularly from corrosion-resistant steel. The shroud may be produced from the same material as that used for producing the base pipe.

The shroud can be held on both sides by the end caps; it may also be firmly connected to the end caps. This fixing is possible for example by way of adhesive bonding, screwing or pinning; the shroud may be welded to the end caps after assembly.

The inside diameter of the shroud must be greater than the outside diameter of the annular discs. This is necessary for technical reasons relating to flow. It has been found to be favorable in this respect that the inside diameter of the shroud is at least 0.5 mm and at most 15 mm greater than the outside diameter of the annular discs. The inside diameter of the shroud may be at least 1.5 mm and at most 5 mm greater than the outside diameter of the annular discs.

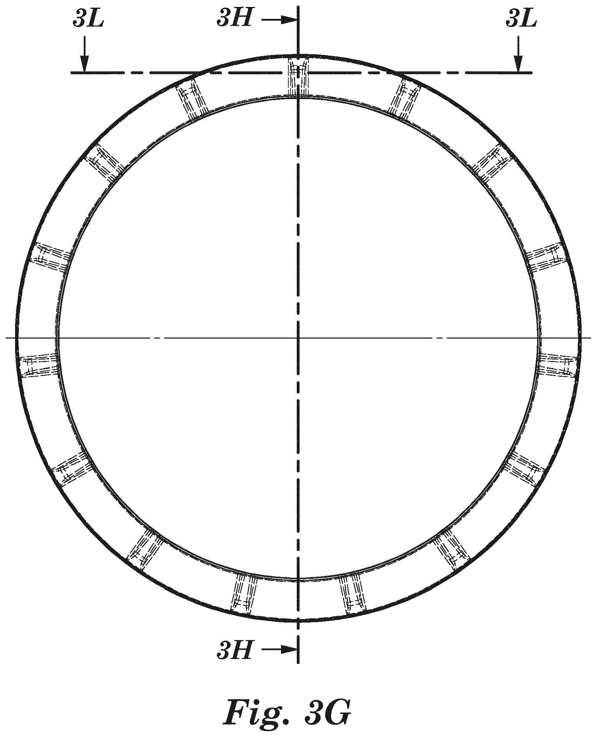

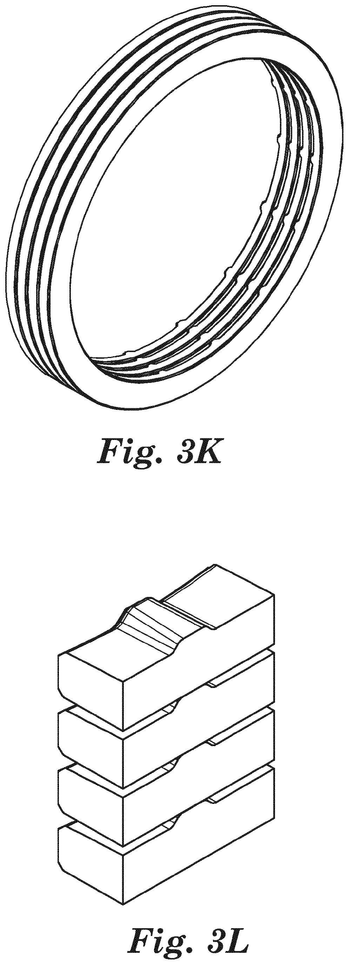

In Figures 3A - 3L, one embodiment of a central annular region of a separating device as disclosed herein is represented. Figures 3A - 3F show various details of an individual annular disc 2 of the central annular region 1. Figures 3G - 3L show the central annular region 1 constructed from annular discs 2 of Figures 3A - 3F, representing various details of the stack of annular discs. Figure 3A shows a plan view of the upper side 3 of the annular disc 2, Figure 3B shows a cross-sectional view along the sectional line denoted in Figure 3A by "3B", Figures 3C - 3D show enlarged details of the cross-sectional view of Figure 3B. The enlarged detail of Figure 3C is in the region of a spacer, the enlarged detail of Figure 3D is in the region between two spacers. Figure 3F shows a 3D view of the annular disc 2, and Figure 3E shows a 3D representation along the sectional line denoted in Figure 3A by "3E". Figure 3G shows a plan view of the central annular region 1 constructed from annular discs 2 of Figures 3A - 3F, Figure 3H shows a cross-sectional view along the sectional line denoted in Figure 3G by "3H", Figures 3I - 3J show enlarged details of the cross-sectional view of Figure 3H. The enlarged detail of Figure 3I is in the region of a spacer, the enlarged detail of Figure 3J is in the region between two spacers. Figure 3K shows a 3D view of the central annular region 1, and Figure 3L shows a 3D representation along the sectional line denoted in Figure 3G by "3L".

The removal of the solid particles takes place at the inlet opening of a separating gap 6, which may be divergent, i.e. opening, in the direction of flow (see Figures 3D and 3J) and is formed between two annular discs lying one over the other. The annular discs are designed appropriately for the materials from which the annular discs are produced and the operational environment intended for the devices made with such annular discs, e.g., materials may be chosen for given pressure, temperature and corrosive operating conditions, and so that cross-sectional transitions may be configured without notches so that the occurrence of flexural stresses is largely avoided by the structural design.

The upper side 3 of each annular disc 2 has fifteen spacers 5 distributed over its circumference. The underside 4 does not comprise any spacers. The spacers 5 are of a defined height, with the aid of which the height of the separating gap 6 (gap width of the filter gap, filter width) is set. The spacers are not separately applied or subsequently welded-on spacers, they are formed directly in production, during the shaping of the annular discs.

The contact area 18 of the spacers 5 is planar (see Figures 3C, 3E), so that the spacers 5 have a planar contact area with the underside 4 of the adjacent annular disc. The upper side 3 of the annular discs is plane-parallel with the underside 4 of the annular discs in the region of the contact area 18 of the spacers 5, i.e. in the region of contact with the adjacent annular disc. The underside 4 of the annular discs is formed as smooth and planar and at right angles to the disc axis and the central axis of the central annular region. At the planar contact area of the spacers, the annular discs contact the respective adjacent annular disc.

The upper side 3 of an annular disc 2 having fifteen spacers 5 is inwardly sloping, in the regions between the spacers. The ring cross-section of the annular discs in the portions between the spacers is trapezoidal (see Figure 3D), the thicker side of the ring cross-section lying on the outside, i.e. on the inlet side of the flow to be filtered.

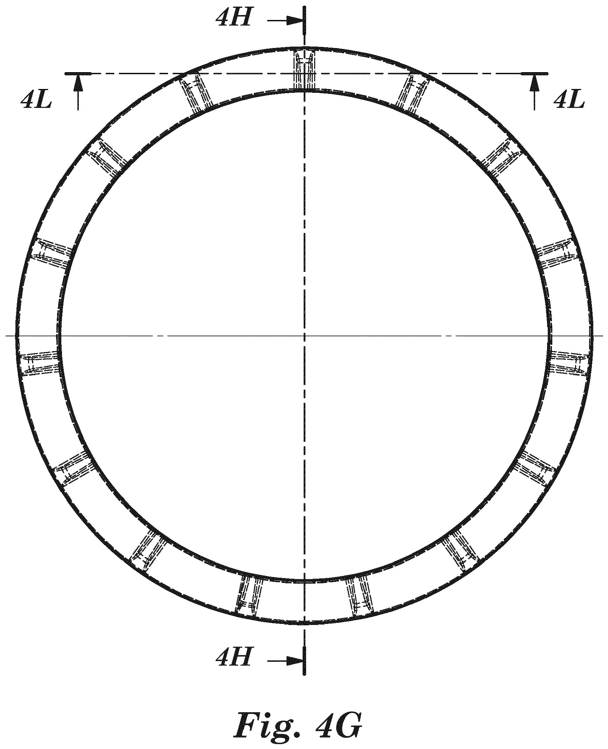

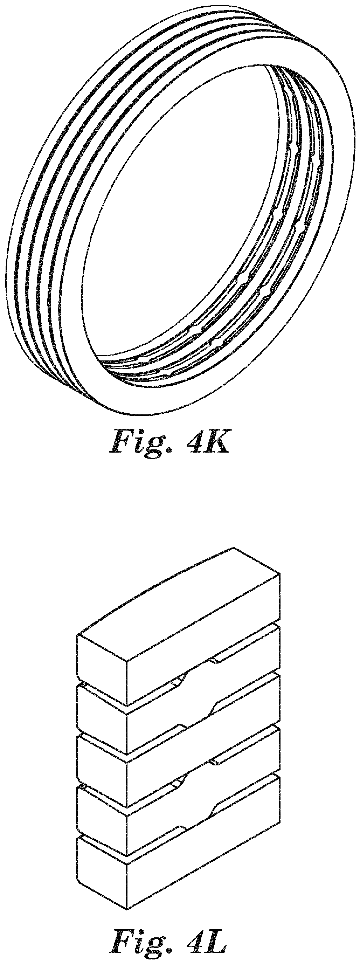

In Figures 4A - 4L, a further embodiment of a central annular region of a separating device as disclosed herein is represented. Figures 4A - 4F show various details of individual annular discs 12 of the central annular region 11. Figures 4G - 4L show the central annular region 11 constructed from annular discs 12 and 13, representing various details of the stack of annular discs. Figure 4A shows a plan view of the upper side 14 and of the underside 15 of the annular disc 12, Figure 4B shows a cross-sectional view along the sectional line denoted in Figure 4A by "4B", Figures 4C - 4D show enlarged details of the cross-sectional view of Figure 4B. The enlarged detail of Figure 4C is in the region of the spacers, the enlarged detail of Figure 4D is in the region between the spacers. Figure 4F shows a 3D view of the annular disc 12, and Figure 4E shows a 3D representation along the sectional line denoted in Figure 4A by "4E". Figure 4G shows a plan view of the central annular region 11 constructed from annular discs 12 and 13, Figure 4H shows a cross-sectional view along the sectional line denoted in Figure 4G by "4H", Figures 4I - 4J show enlarged details of the cross-sectional view of Figure 4H. The enlarged detail of Figure 4I is in the region of a spacer, the enlarged detail of Figure 4J is in the region between the spacers. Figure 4K shows a 3D view of the central annular region 11, and Figure 4L shows a 3D representation along the sectional line denoted in Figure 4G by "4L".

The stack of annular discs 11 is composed of annular discs 12 and 13 which are stacked in an alternating manner. Every second annular disc in the stack is an annular disc 12 having fifteen spacers 5 on the upper side 14 of the annular disc 12 distributed over its circumference (see Figure 4A) and fifteen spacers 5 on the underside 15 of the annular disc 12 distributed over its circumference. The plan view of the upper side 14 of Figure 4A is identical to the plan view of the underside 15. The spacers 5 of the annular discs 12 are of a defined height, with the aid of which the height of the separating gap 6 (gap width of the filter gap, filter width) is set. The spacers are not separately applied or subsequently welded-on spacers, they are formed directly in production, during the shaping of the annular discs.

The respectively adjacent annular discs of the annular discs 12 in the stack of annular discs 11 are annular discs 13 as shown in Figures 4H - 4J. The upper side 16 and the underside 17 of the annular discs 13 do not comprise any spacers.

The removal of the solid particles takes place at the inlet opening of a separating gap 6, which may be divergent, i.e. opening, in the direction of flow (see Figures 4D and 4J) and is formed between two adjacent annular discs lying one over the other. The annular discs are designed appropriately for the materials from which the annular discs are produced and the operational environment intended for the devices made with such annular discs, e.g., materials may be chosen for given pressure, temperature and corrosive operating conditions, and so that cross-sectional transitions may be configured without notches so that the occurrence of flexural stresses is largely avoided by the structural design.

The contact area 18 of the spacers 5 is planar (see Figures 4C, 4E), so that the spacers 5 have a planar contact area with the underside 17 or upper side 16 of the adjacent annular disc 13. The upper side 14 of the annular discs 12 is plane-parallel with the underside 15 of the annular discs 12 in the region of the contact area 18 of the spacers 5, i.e. in the region of contact with the adjacent annular disc. At the planar contact area of the spacers, the annular discs contact the respective adjacent annular disc 13.

The upper side 16 and the underside 17 of the annular discs 13 is formed as smooth and planar and at right angles to the disc axis and the central axis of the central annular region.

The upper side 14 and the underside 15 of an annular disc 12 having fifteen spacers 5 is inwardly sloping, in the regions between the spacers 5. The ring cross-section of the annular discs in the portions between the spacers is trapezoidal (see Figure 4D), the thicker side of the ring cross-section lying on the outside, i.e. on the inlet side of the flow to be filtered.

In Figure 5A, a plan view of the perforated pipe of a separating device as disclosed herein is represented. Perforations 20 are provided in the pipe 7. On the outer surface of the perforated pipe 7, a band 10 is provided helically in axial direction of the perforated pipe. The helical band 10 has a profiled configuration in axial direction of the band. The profiled configuration is a curvature having an outwardly curved side. The outwardly curved side of the curvature is oriented towards the perforated pipe, i.e. inwards.

The helical band 10 has three windings 24, 25, 26 around the outer surface of the perforated pipe 7. The distance between windings 24, 25 is the same as the distance between windings 25, 26. In other words, the distance between adjacent windings 24, 25 and 25, 26 is constant, which means that there is a constant slope of the windings of the helical band, and also the winding length is constant. The helical band consists of one single continuous helical band extending from the lower end to the upper end of the perforated pipe.

The helical band 10 is fixed onto the outer surface of the perforated pipe 7 by welding. The helical band is made from spring strip steel.

As can be seen in Figure 5A, the perforated pipe 7 has perforations 20 being arranged helically in axial direction of the perforated pipe. By this arrangement of the perforations, there is only one perforation on a circumferential line at the outer surface of the perforated pipe. The arrangement with only one perforation per each circumferential line results in a higher mechanical strength of the perforated pipe and of the separating device. The helical band 10 is arranged in parallel to the helical arrangement of the perforations, so that the helical band does not cover the perforations.

Figure 5B represents a cross-sectional view of the perforated pipe shown in Figure 5A. The curvature of the helical band 10 having an outwardly curved side can be seen, with the outwardly curved side of the curvature being oriented towards the perforated pipe 7, i.e. inwards. The annular discs 2, 12, 13 are placed around the helical band 10, whereby the annular discs are centered on the perforated pipe 7.

In Figure 6A, a plan view of the perforated pipe of further separating device as disclosed herein is represented. Perforations 20 are provided in the pipe 7. On the outer surface of the perforated pipe 7, a band 10 is provided helically in axial direction of the perforated pipe. The helical band 10 has a profiled configuration in axial direction of the band. The profiled configuration is a curvature having an outwardly curved side. The outwardly curved side of the curvature is oriented towards the central annular region, i.e. outwards.

The helical band 10 has three windings 24, 25, 26 around the outer surface of the perforated pipe 7. The distance between windings 24, 25 is the same as the distance between windings 25, 26. In other words, the distance between adjacent windings 24, 25 and 25, 26 is constant, which means that there is a constant slope of the windings of the helical band, and also the winding length is constant. The helical band consists of one single continuous helical band extending from the lower end to the upper end of the perforated pipe.

The helical band 10 is fixed onto the outer surface of the perforated pipe 7 by welding. The helical band is made from spring strip steel.

As can be seen in Figure 6A, the perforated pipe 7 has perforations 20 being arranged helically in axial direction of the perforated pipe. By this arrangement of the perforations, there is only one perforation on a circumferential line at the outer surface of the perforated pipe. The arrangement with only one perforation per each circumferential line results in a higher mechanical strength of the perforated pipe and of the separating device. The helical band 10 is arranged in parallel to the helical arrangement of the perforations, so that the helical band does not cover the perforations.

Figure 6B represents a cross-sectional view of the perforated pipe shown in Figure 6A. The curvature of the helical band 10 having an outwardly curved side can be seen, with the outwardly curved side of the curvature being oriented towards the central annular region 1, 11, i.e. outwards. The annular discs 2, 12, 13 are placed around the helical band, whereby the annular discs are centered on the perforated pipe 7.

The separating device according to the present disclosure may be used for removing solid particles from a fluid. A fluid as used herein means a liquid or a gas or combinations of liquids and gases.

The separating device according to the present disclosure may be used in extraction wells in oil and/or gas reservoirs for separating solid particles from volumetric flows of mineral oil and/or natural gas. The separating device may also be used for other filtering processes for removing solid particles from fluids outside of extraction wells, processes in which a great abrasion resistance and a long lifetime of the separating device are required, such as for example for filtering processes in mobile and stationary storage installations for fluids or for filtering processes in naturally occurring bodies of water, such as for instance in the filtering of seawater. The separating device disclosed herein can also be used in a process for extracting ores and minerals. In the extraction of ore and many other minerals, there are problems of abrasion and erosion in the removal of solid particles from fluid flows. The separating device according to the present disclosure is particularly suitable for the separation of solid particles from fluids, in particular from mineral oil, natural gas and water, in extraction wells in which high and extremely high rates of flow and delivery volumes occur.

## Claims

1. A separating device for removing solid particles from fluids, comprising:
- a stack of at least three annular discs defining a central annular region (1) along a central axis, each annular disc (2) having an upper side (3) and an underside (4), wherein the upper side (3) of each annular disc (2) each has two or more spacers (5), and wherein the upper side (3) of each annular disc (2) contacts the underside (4) of the adjacent annular disc defining a separating gap (6),
- a perforated pipe (7), which is located inside the concentric stack (1) of at least three annular discs,
- an end cap (8) at the upper end of the central annular region and an end cap (9) at the lower end of the central annular region (1), and
- a band (10) which is provided helically in axial direction on the outer surface of the perforated pipe (7) and around which the annular discs are placed, whereby the annular discs (2) are centered on the perforated pipe (7).

2. A separating device for removing solid particles from fluids, comprising:
- a stack of at least three annular discs defining a central annular region (11) along a central axis, each annular disc (12, 13) having an upper side (14, 16) and an underside (15, 17), wherein the upper side (14) and the underside (15) of every second annular disc (12) in the stack each has two or more spacers (5), and wherein the upper side (16) and the underside (17) of the respectively adjacent annular discs (13) do not comprise any spacers, and wherein the upper side (14, 16) of each annular disc contacts the underside (15, 17) of the adjacent annular disc defining a separating gap (6),
- a perforated pipe (7), which is located inside the concentric stack (11) of at least three annular discs,
- an end cap (8) at the upper end of the central annular region and an end cap (9) at the lower end of the central annular region, and
- a band (10) which is provided helically in axial direction on the outer surface of the perforated pipe (7) and around which the annular discs are placed, whereby the annular discs (12, 13) are centered on the perforated pipe (7).

3. The separating device according to claim 1 or 2, wherein the band (10) has elastic properties in a direction perpendicular to the central axis of the central annular region (1, 11).

4. The separating device according to any of claims 1 to 3, wherein the band (10) has a planar configuration, or wherein the band has a profiled configuration in axial direction of the band.

5. The separating device according to any of claims 1 to 4, wherein the band (10) has a profiled configuration in axial direction of the band, and wherein the profiled configuration is a curvature having an outwardly curved side, and wherein the outwardly curved side of the curvature is oriented towards the perforated pipe (7) or towards the central annular region (1).

6. The separating device according to any of claims 1 to 5, wherein the band (10) has one winding around the outer surface of the perforated pipe (7), or wherein the band (10) has a plurality of windings around the outer surface of the perforated pipe (7).

7. The separating device according to any of claims 1 to 6, wherein the band (10) has a plurality of windings around the outer surface of the perforated pipe (7), and wherein the distance between adjacent windings is constant.

8. The separating device according to any of claims 1 to 6, wherein the band (10) has a plurality of windings around the outer surface of the perforated pipe (7), and wherein the distance between adjacent windings is variable in axial direction, and wherein the distance between adjacent windings preferably is decreasing in axial direction towards the upper end of the separating device.

9. The separating device according to any of claims 1 to 8, wherein the band (10) is fixed on the outer surface of the perforated pipe (7).

10. The separating device according to any of claims 1 to 9, wherein the perforated pipe (7) has perforations being arranged helically in axial direction of the perforated pipe.

11. The separating device according to any of claims 1 to 10, wherein the two or more spacers (5) have a planar contact area (18) with the adjacent annular disc.

12. The separating device according to any of claims 1 to 11, wherein each annular disc comprises a material independently selected from the group consisting of (i) ceramic materials; (ii) mixed materials having fractions of ceramic or metallic hard materials and a metallic binding phase; and (iii) powder metallurgical materials with hard material phases formed in-situ.

13. The separating device according to any of claims 1 to 12, wherein the material of annular discs is sintered silicon carbide (SSiC) or boron carbide.

14. The separating device according to any of claims 1 to 13, further comprising a shroud (19) for protection from mechanical damage.

15. Use of the separating device of any of claims 1 to 14 for removing solid particles from fluids
in a process for extracting fluids from extraction wells, or
in water or in storage installations for fluids, or
in a process for extracting ores and minerals.

## Patentansprüche

1. Eine Filtervorrichtung zum Entfernen von Feststoffteilchen aus Fluiden, umfassend:
- einen Stapel aus mindestens drei Ringscheiben, die entlang einer Mittelachse einen zentralen Ringbereich (1) definieren, wobei jede Ringscheibe (2) eine Oberseite (3) und eine Unterseite (4) aufweist, wobei die Oberseite (3) jeder Ringscheibe (2) jeweils zwei oder mehr Abstandshalter (5) aufweist, und wobei die Oberseite (3) jeder Ringscheibe (2) die Unterseite (4) der benachbarten Ringscheibe berührt und somit einen Trennspalt (6) definiert,
- ein perforiertes Rohr (7), das sich innerhalb des konzentrischen Stapels (1) aus mindestens drei Ringscheiben befindet,
- eine Endkappe (8) am oberen Ende des zentralen Ringbereichs und eine Endkappe (9) am unteren Ende des zentralen Ringbereichs (1), und
- ein Band (10), das spiralförmig in axialer Richtung auf der Außenfläche des perforierten Rohrs (7) vorgesehen ist und um das herum die Ringscheiben gelegt sind, wodurch die Ringscheiben (2) auf dem perforierten Rohr (7) zentriert werden.

2. Eine Filtervorrichtung zum Entfernen von Feststoffteilchen aus Fluiden, umfassend:
- einen Stapel aus mindestens drei Ringscheiben, die einen zentralen Ringbereich (11) entlang einer Mittelachse definieren, wobei jede Ringscheibe (12, 13) eine Oberseite (14, 16) und eine Unterseite (15, 17) aufweist, wobei die Oberseite (14) und die Unterseite (15) jeder zweiten Ringscheibe (12) in dem Stapel jeweils zwei oder mehr Abstandshalter (5) aufweist und wobei die Oberseite (16) und die Unterseite (17) der jeweils benachbarten Ringscheiben (13) keine Abstandshalter aufweisen und wobei die Oberseite (14, 16) jeder Ringscheibe die Unterseite (15, 17) der benachbarten Ringscheibe berührt und somit einen Trennspalt (6) definiert,
- ein perforiertes Rohr (7), das sich innerhalb des konzentrischen Stapels (11) aus mindestens drei Ringscheiben befindet,
- eine Endkappe (8) am oberen Ende des zentralen Ringbereichs und eine Endkappe (9) am unteren Ende des zentralen Ringbereichs, und
- ein Band (10), das spiralförmig in axialer Richtung auf der Außenfläche des perforierten Rohrs (7) vorgesehen ist und um das herum die Ringscheiben gelegt sind, wodurch die Ringscheiben (12, 13) auf dem perforierten Rohr (7) zentriert werden.

3. Die Filtervorrichtung nach Anspruch 1 oder 2, wobei das Band (10) elastische Eigenschaften in einer senkrecht zur Mittelachse des zentralen Ringbereichs (1, 11) verlaufenden Richtung aufweist.

4. Die Filtervorrichtung nach einem der Ansprüche 1 bis 3, wobei das Band (10) eine planare Konfiguration aufweist oder wobei das Band eine profilierte Konfiguration in axialer Richtung des Bandes aufweist.

5. Die Filtervorrichtung nach einem der Ansprüche 1 bis 4, wobei das Band (10) in axialer Richtung des Bandes eine profilierte Konfiguration aufweist und wobei die profilierte Konfiguration eine Krümmung mit einer nach außen gekrümmten Seite ist und wobei die nach außen gekrümmte Seite der Krümmung zu dem perforierten Rohr (7) oder zu dem zentralen Ringbereich (1) hin ausgerichtet ist.

6. Die Filtervorrichtung nach einem der Ansprüche 1 bis 5, wobei das Band (10) eine Windung um die Außenfläche des perforierten Rohrs (7) herum aufweist oder wobei das Band (10) eine Mehrzahl von Windungen um die Außenfläche des perforierten Rohrs (7) herum aufweist.

7. Die Filtervorrichtung nach einem der Ansprüche 1 bis 6, wobei das Band (10) eine Mehrzahl von Windungen um die Außenfläche des perforierten Rohrs (7) herum aufweist und wobei der Abstand zwischen benachbarten Windungen konstant ist.

8. Die Filtervorrichtung nach einem der Ansprüche 1 bis 6, wobei das Band (10) eine Mehrzahl von Windungen um die Außenfläche des perforierten Rohrs (7) herum aufweist und wobei der Abstand zwischen benachbarten Windungen in axialer Richtung variabel ist und wobei der Abstand zwischen benachbarten Windungen vorzugsweise in axialer Richtung zum oberen Ende der Filtervorrichtung hin abnimmt.

9. Die Filtervorrichtung nach einem der Ansprüche 1 bis 8, wobei das Band (10) an der Außenfläche des perforierten Rohrs (7) befestigt ist.

10. Die Filtervorrichtung nach einem der Ansprüche 1 bis 9, wobei das perforierte Rohr (7) Perforationen aufweist, die spiralförmig in axialer Richtung des perforierten Rohrs angeordnet sind.

11. Die Filtervorrichtung nach einem der Ansprüche 1 bis 10, wobei die zwei oder mehr Abstandshalter (5) eine ebene Kontaktfläche (18) mit der benachbarten Ringscheibe aufweisen.

12. Die Filtervorrichtung nach einem der Ansprüche 1 bis 11, wobei jede Ringscheibe ein Material umfasst, das unabhängig ausgewählt ist aus der Gruppe bestehend aus (i) Keramikmaterialien; (ii) Mischmaterialien mit Anteilen keramischer oder metallischer Hartstoffe und einer metallischen Bindephase; und (iii) pulvermetallurgischen Materialien mit in-situ gebildeten Hartstoffphasen.

13. Die Filtervorrichtung nach einem der Ansprüche 1 bis 12, wobei das Material der Ringscheiben gesintertes Siliciumcarbid (SSiC) oder Borcarbid ist.

14. Die Filtervorrichtung nach einem der Ansprüche 1 bis 13, ferner umfassend eine Verkleidung (19) zum Schutz vor mechanischer Beschädigung.

15. Verwendung der Filtervorrichtung nach einem der Ansprüche 1 bis 14 zum Entfernen von Feststoffteilchen aus Fluiden
in einem Verfahren zum Extrahieren von Fluiden aus Extraktionsbohrlöchern, oder
in Wasser oder in Lageranlagen für Fluide, oder
in einem Verfahren zur Gewinnung von Erzen und Mineralien.

## Revendications

1. Dispositif de séparation pour retirer des particules solides de fluides, comprenant :
- un empilement d'au moins trois disques annulaires définissant une région annulaire centrale (1) le long d'un axe central, chaque disque annulaire (2) ayant un côté supérieur (3) et un côté inférieur (4), dans lequel le côté supérieur (3) de chaque disque annulaire (2) chacun a deux ou plusieurs entretoises (5), et dans lequel le côté supérieur (3) de chaque disque annulaire (2) contacte le côté inférieur (4) du disque annulaire adjacent définissant un écartement de séparation (6),
- un tuyau perforé (7), qui est situé à l'intérieur de l'empilement concentrique (1) d'au moins trois disques annulaires,
- une coiffe d'extrémité (8) au niveau de l'extrémité supérieure de la région annulaire centrale et une coiffe d'extrémité (9) au niveau de l'extrémité inférieure de la région annulaire centrale (1), et
- une bande (10) qui est ménagée de manière hélicoïdale dans la direction axiale sur la surface externe du tuyau perforé (7) et autour de laquelle les disques annulaires sont placés, de telle manière que les disques annulaires (2) sont centrés sur le tuyau perforé (7).

2. Dispositif de séparation pour retirer des particules solides de fluides, comprenant :
- un empilement d'au moins trois disques annulaires définissant une région annulaire centrale (11) le long d'un axe central, chaque disque annulaire (12, 13) ayant un côté supérieur (14, 16) et un côté inférieur (15, 17), dans lequel le côté supérieur (14) et le côté inférieur (15) d'un disque annulaire (12) sur deux dans l'empilement chacun a deux ou plusieurs entretoises (5), et dans lequel le côté supérieur (16) et le côté inférieur (17) des disques annulaires adjacents (13) respectivement ne comprennent pas d'entretoises, et dans lequel le côté supérieur (14, 16) de chaque disque annulaire contacte le côté inférieur (15, 17) du disque annulaire adjacent définissant un écartement de séparation (6),
- un tuyau perforé (7), qui est situé à l'intérieur de l'empilement concentrique (11) d'au moins trois disques annulaires,
- une coiffe d'extrémité (8) au niveau de l'extrémité supérieure de la région annulaire centrale et une coiffe d'extrémité (9) au niveau de l'extrémité inférieure de la région annulaire centrale, et
- une bande (10) qui est ménagée de manière hélicoïdale dans la direction axiale sur la surface externe du tuyau perforé (7) et autour de laquelle les disques annulaires sont placés, de telle manière que les disques annulaires (12, 13) sont centrés sur le tuyau perforé (7).

3. Dispositif de séparation selon la revendication 1 ou 2, dans lequel la bande (10) a des propriétés élastiques dans une direction perpendiculaire à l'axe central de la région annulaire centrale (1, 11).

4. Dispositif de séparation selon l'une quelconque des revendications 1 à 3, dans lequel la bande (10) a une configuration planaire, ou dans lequel la bande a une configuration profilée dans la direction axiale de la bande.

5. Dispositif de séparation selon l'une quelconque des revendications 1 à 4, dans lequel la bande (10) a une configuration profilée dans la direction axiale de la bande, et dans lequel la configuration profilée est une courbure ayant un côté incurvé vers l'extérieur, et dans lequel le côté incurvé vers l'extérieur de la courbure est orienté vers le tuyau perforé (7) ou vers la région annulaire centrale (1).

6. Dispositif de séparation selon l'une quelconque des revendications 1 à 5, dans lequel la bande (10) a un enroulement autour de la surface externe du tuyau perforé (7), ou dans lequel la bande (10) a une pluralité d'enroulements autour de la surface externe du tuyau perforé (7).

7. Dispositif de séparation selon l'une quelconque des revendications 1 à 6, dans lequel la bande (10) a une pluralité d'enroulements autour de la surface externe du tuyau perforé (7), et dans lequel la distance entre des enroulements adjacents est constante.

8. Dispositif de séparation selon l'une quelconque des revendications 1 à 6, dans lequel la bande (10) a une pluralité d'enroulements autour de la surface externe du tuyau perforé (7), et dans lequel la distance entre des enroulements adjacents est variable dans la direction axiale, et dans lequel la distance entre des enroulements adjacents diminue de préférence dans la direction axiale vers l'extrémité supérieure du dispositif de séparation.

9. Dispositif de séparation selon l'une quelconque des revendications 1 à 8, dans lequel la bande (10) est fixée sur la surface externe du tuyau perforé (7).

10. Dispositif de séparation selon l'une quelconque des revendications 1 à 9, dans lequel le tuyau perforé (7) a des perforations étant agencées de manière hélicoïdale dans la direction axiale du tuyau perforé.

11. Dispositif de séparation selon l'une quelconque des revendications 1 à 10, dans lequel les deux ou plusieurs entretoises (5) ont une aire de contact planaire (18) avec le disque annulaire adjacent.

12. Dispositif de séparation selon l'une quelconque des revendications 1 à 11, dans lequel chaque disque annulaire comprend un matériau choisi indépendamment dans le groupe constitué de (i) matériaux céramiques ; (ii) matériaux mélangés ayant des fractions de matériaux durs céramiques ou métalliques et une phase de liaison métallique ; et (iii) des matériaux métallurgiques en poudre avec des phases de matériau dur formées in situ.

13. Dispositif de séparation selon l'une quelconque des revendications 1 à 12, dans lequel le matériau de disques annulaires est du carbure de silicium fritté (SSiC) ou du carbure de bore.

14. Dispositif de séparation selon l'une quelconque des revendications 1 à 13, comprenant en outre un carénage (19) pour une protection contre un dommage mécanique.

15. Utilisation du dispositif de séparation selon l'une quelconque des revendications 1 à 14 pour retirer des particules solides de fluides
dans un procédé pour extraire des fluides de puits d'extraction, ou
dans de l'eau ou dans des installations de stockage de fluides, ou
dans un procédé pour extraire des minerais et des minéraux.
